# EUROPÄISCHE PATENTSCHRIFT

(11) **EP 4 518 146 B1**
(45) Veröffentlichungstag und Bekanntmachung des Hinweises auf die Patenterteilung: **31.12.2025**
(21) Anmeldenummer: 24197219.9
(22) Anmeldetag: 29.08.2024
(51) Int. Cl.: H02S 20/10, H02S 20/30, F24S 30/00

(54) **VORRICHTUNG ZUR BESCHATTUNG UND ENERGIEGEWINNUNG**
SHADING AND ENERGY HARVESTING DEVICE
DISPOSITIF DE PULVÉRISATION ET DE PRODUCTION D'ÉNERGIE

(30) Priorität: 29.08.2023 DE 102023123240; 19.04.2024 EP 24171387
(43) Veröffentlichungstag der Anmeldung: 05.03.2025
(73) Patentinhaber: A. Dohrn & A. Timm GmbH & Co. KG, 22765 Hamburg (DE)
(72) Erfinder: Röhl, Jürgen, 22605 Hamburg (DE); Mühlbauer, Sabine, 22609 Hamburg (DE)
(74) Vertreter: Raffay & Fleck

(56) Entgegenhaltungen:
- WO-A1-2015/190251
- WO-A1-2022/234556
- WO-A1-2023/105515
- CN-A- 109 004 894
- KR-A- 20200 119 044
- KR-A- 20210 022 440

## Beschreibung

Die Erfindung betrifft eine Vorrichtung zur besseren Nutzung von Flächen, insbesondere Nutzflächen, wie beispielsweise Agrarflächen oder von Menschen persönlich benutzten Flächen, wie beispielsweise Parkflächen, Terrassen, Schwimmbäder.

Flächen auf der Erdoberfläche werden derzeit vom Menschen auf vielfältige Art und Weise genutzt. So können die Flächen, als Nutzflächen von Personen persönlich benutzt werden oder als Agrarflächen von der Menschheit in der Agrarwirtschaft benutzt werden. Diese Nutzflächen können beispielsweise vom Menschen persönlich genutzt werden, um darauf bestimmte Tätigkeiten vorzunehmen. So können auf diesen Flächen von Menschen erstellte weitere Einrichtungen oder andere Aufenthaltsbereiche angeordnet sein, wie beispielsweise Parkflächen, Terrassen, Balkone, Schwimmbäder oder andere Wasserflächen.

Ein Anliegen für derartigen persönlichen Nutzflächen ist es, einerseits Sonnenstrahlen auf diese Flächen zuzulassen, bspw. damit auf die sich auf diesen Flächen aufhaltenden Personen Sonnenstrahlen direkt scheinen können. Gleichwohl ist es zu bestimmten Zeiten, insbesondere Mittags, von Vorteil eine Beschattung für diese Flächen bereitzustellen.

Flächen werden jedoch auch für die Agrarwirtschaft verwendet. Agrarwirtschaftliche Flächen in Deutschland belaufen sich im Jahr 2022 auf 16,6 Millionen Hektar, im Bundesland Brandenburg beträgt diese Fläche 1,4 Millionen Hektar, also in etwa die Hälfte der Fläche des Bundeslandes Brandenburg. Diese Fläche ist auch zur Versorgung notwendig und muss agrarwirtschaftlich genutzt werden. Um die bspw. aus dem Boden stammenden Nährstoffe umzusetzen, benötigen die auf der Agrarfläche angepflanzten Pflanzen Sonnenlicht zu Photosynthese.

Gleichwohl ist die Nutzung von Flächen auch für sogenannte Solarparks bekannt, bei denen auf diesen Flächen Photovoltaikmodule angeordnet sind, um Energie gewinnen zu können. Eine Vorrichtung für einen solchen Solarpark ist beispielsweise in der WO 2023/105515 A1 offenbart, bei dem mehrere Photovoltaikmodule über einer Fläche angeordnet und mit einem Seil verbunden sind, um so einerseits den Anstellwinkel der Photovoltaikmodule zu verändern und anderseits die Photovoltaikmodule zwecks Wartung zu bewegen. Da oft nicht genug Flächen zur Verfügung stehen, werden oft auch Gebäudeflächen zur Energiegewinnung verwendet (wie bspw. Balkonphotovoltaikanlagen, die an den senkrechten Flächen der Balkone angeordnet sind, um so Energie zu gewinnen, ohne dabei weiter zu stören). Auch die Agrarflächen bieten riesige Fläche, um als Fläche für die Energiegewinnung, nämlich Stromgewinnung mittels Photovoltaikanlagen, verwendet zu werden.

All diesen Nutzungen der Photovoltaikanlagen ist gemein, dass diese sowohl Flächen benötigen als auch das Sonnenlicht. Die Photovoltaikanlagen fangen somit notwendigerweise das Sonnenlicht ab, wodurch die die darunter befindliche Fläche kein direktes Sonnenlicht erhält, obgleich dies jedoch gewollt ist, bspw. bei den persönlichen Nutzflächen, wie bspw. Schwimmbädern, oder benötigt wird, wie bspw. bei den Agrarflächen. Hier bestehen somit also widerstreitende Interessen.

Die durch die Erfindung zu lösende Aufgabe besteht somit darin, die Nutzung, insbesondere die agrarwirtschaftliche oder persönliche Nutzung, von Flächen, insbesondere Nutzflächen, insbesondere persönlichen Nutzflächen und/oder agrarwirtschaftlichen Nutzflächen, nicht durch Vorrichtungen zur Energiegewinnung über die Maßen zu beinträchtigen und teilweise sogar zu verbessern. Insbesondere soll die Lösung eine Verwendung auf Freiflächen in großem Maßstab ermöglichen und Windlasten und/oder Niederschlagslasten widerstehen können.

Diese Aufgabe wird gelöst durch eine ein System wie nachfolgend beschrieben und nach Anspruch 1 beansprucht und durch ein Verfahren wie nachfolgend beschrieben und nach Anspruch 15 beansprucht.

Weitere Lösungen insbesondere vorteilhafte Ausbildungen der vorgenannten Lösungen sind in den weiteren Ansprüchen sowie in der nun folgenden Beschreibung dargestellt.

Der Kern der Erfindung liegt nun zunächst darin, dass ein System und ein Verfahren bereitgestellt werden, die sowohl die weitere, insbesondere agrarwirtschaftliche oder persönliche, Nutzung der Nutzflächen gewährleisten und gleichzeitig auch die Energiegewinnung mittels Photovoltaikmodule ermöglichen. Hierfür ist im Kern insbesondere vorgesehen, dass Photovoltaikmodule weitestgehend übereinander, insbesondere paarweise, geschoben werden können, jedoch auch voneinander, insbesondere vereinzelt, weggeschoben werden können.

Durch das erfindungsgemäße System und Verfahren ist es somit beispielsweise möglich, auf flexible Art und Weise, somit insbesondere angepasst an die gerade vorherrschenden Wetterbedingungen, eine Beschattung einerseits und eine maximale Energiegewinnung anderseits, insbesondere als Folge des anderen, bereitzustellen. Durch die Beschattungsfunktion wird auch verhindert, dass es zu einer (weiteren) Desertifikation der Agrarflächen kommt.

Das erfindungsgemäße System ist somit zur Energiegewinnung, insbesondere Stromgewinnung, auf einer Nutzfläche und zur Beschattung dieser Nutzfläche eingerichtet.

Hierfür erstreckt sich das erfindungsgemäße System insbesondere entlang einer Längserstreckung. Diese kann eine Gerade, aber auch eine Kurve darstellen. Das System weist nun zunächst eine erste an einem ersten Ende der Längsrichtung des Systems angeordnete Seilhaltevorrichtung und eine zweite an einem zweiten dem ersten Ende gegenüberliegenden Ende der Längsrichtung des Systems angeordnete Seilhaltevorrichtung auf. Zwischen diesen Seilhaltevorrichtungen ist mindestens ein Seil, insbesondere genau ein Seil, insbesondere ein Seilzug, insbesondere ein geschlossener Seilzug, angeordnet und aufgespannt. Ferner weist das System mindestens eine Stützvorrichtung, insbesondere mehrere Stützvorrichtungen, auf. Diese mindestens eine Stützvorrichtung ist zwischen der ersten und zweiten Seilhaltevorrichtung angeordnet. Sofern mehrere Stützvorrichtungen verwendet werden, insbesondere dann, wenn die Längserstreckung mehrere Meter umfasst, sind die Stützvorrichtungen ferner jeweils entlang der Längsrichtung des Systems voneinander beabstandet. Ferner weist das System mindestens eine mindestens ein Photovoltaikmodul, insbesondere mindestens zwei Photovoltaikmodule, umfassende Photovoltaikmodulgruppe auf. Vorteilhafterweise umfasst die Photovoltaikmodulgruppe mindestens zwei Photovoltaikmodul und bildet ein Paar, ein Photovoltaikmodulpaar. Vorteilhafterweise weist das Systemmehrere Paare von Photovoltaikmodule auf. Ferner weist das System mindestens eine Bewegungsvorrichtung auf.

Bei dem mindestens einen Seil kann es sich um ein Stahlseil oder um ein Stahlkabel handeln. Es kann auch jedes andere länglichen Verbindungselement sein, sollte jedoch die auf diesem Element wirkende Kräfte entgegenwirken können, beispielsweise die Auflast, hervorgerufen durch die an dem Element angeordneten und von diesem gehaltenen Vorrichtungen und durch die auf die Vorrichtung wirkenden und auf die Elemente übertragenen Kräfte, bspw. Wind auf das Photovoltaikmodul. Die Verwendung eines Seils ermöglicht eine einfache Konstruktion, die gelichzeitig Wind- und Niederschlagslasten widerstehen kann.

Vorteilhafterweise weist die mindestens eine, insbesondere jede, Stützvorrichtung eine Höhenerstreckung bis zu einem oberen Haltebereich auf. Vorteilhafterweise wird das mindestens eine Seil über eine Aufspannstrecke zwischen der ersten und der zweiten Seilhaltevorrichtung aufgespannt und zumindest teilweise, insbesondere abschnittsweise, in dem Haltebereich lagernd, insbesondere gleitend, gehalten.

Vorteilhafterweise erstreckt sich die Aufspannstrecke in einem ersten Teilabschnitt von der ersten Seilhaltevorrichtung über jeweils benachbarte Stützvorrichtungen hin zur zweiten Seilhaltevorrichtung. Vorteilhafterweise erstreckt sich die Aufspannstrecke in einem zweiten Teilabschnitt von der zweiten Seilhaltevorrichtung über die jeweils benachbarte Stützvorrichtungen hin zur ersten Seilhaltevorrichtung. Vorteilhafterweise ist das mindestens eine Seil entlang der Aufspannstrecke mittels der Bewegungsvorrichtung bewegbar. Vorstellbar ist, dass sich entlang der beiden Teilabschnitte jeweils ein separates Seil erstreckt. Vorstellbar ist es jedoch auch, dass das System lediglich genau ein Seil aufweist, und insbesondere sich das eine Seil in dem ersten Teilabschnitt von der ersten Seilhaltevorrichtung hin zur zweiten Seilhaltevorrichtung und sich hierauf um die zweite Seilhaltevorrichtung und im zweiten Teilabschnitt wieder zurück zur ersten Seilhaltevorrichtung erstreckt und somit insbesondere geschlossen ist. Insbesondere verlaufen die Teilabschnitte zwischen zwei und/oder allen Stützvorrichtungen parallel und/oder im Wesentlichen horizontal. Insbesondere weisen sie, insbesondere betrachtet in einer horizontalen Ebene, senkrecht zu ihrer Längserstreckung die selbe Länge aus.

Vorteilhafterweise ist je Photovoltaikmodulgruppe das mindestens eine Photovoltaikmodul an dem mindestens einen Seil angeordnet.

Vorteilhafterweise sind je Photovoltaikmodulpaar die beiden Photovoltaikmodul des Photovoltaikmodulpaar an dem mindestens einen Seil angeordnet.

Vorteilhafterweise ist je Photovoltaikmodulgruppe ein erstes Photovoltaikmodul innerhalb des ersten Teilabschnitts der Aufspannstrecke, starr, fest und/oder ortsgebunden an einer in dem ersten Teilabschnitt angeordneten Teilstrecke des mindestens einen Seils angeordnet, insbesondere geklemmt und ist insbesondere ortsungebunden am zweiten Teilabschnitt befestigt.

Vorteilhafterweise ist je Photovoltaikmodulgruppe ein zweites Photovoltaikmodul innerhalb des zweiten Teilabschnitts der Aufspannstrecke, starr, fest und/oder ortsgebunden an einer in dem zweiten Teilabschnitt angeordneten Teilstrecke des mindestens einen Seils angeordnet, insbesondere geklemmt und ist insbesondere ortsungebunden am ersten Teilabschnitt befestigt.

Vorteilhafterweise sind die Photovoltaikmodul der Photovoltaikmodulgruppe entlang der Aufspannstrecke jeweils benachbart angeordnet sind.

Vorteilhafterweise ist je Photovoltaikmodulpaar das eine Photovoltaikmodul des Paars auf/in einem Rahmen aufgenommen und sind der Rahmen und das andere Photovoltaikmodul des Paars so ausgebildet, dass das andere Photovoltaikmodul vom Rahmen zumindest teilweise umschlossen ist und/oder zumindest ein Teil des Rahmens das andere Photovoltaikmodul umgibt, insbesondere das andere Photovoltaikmodul zumindest teilweise, insbesondere entlang der gesamten Länge und Breite, innerhalb des Rahmens und unter dem einen Photovoltaikmodul angeordnet werden kann.

Vorteilhafterweise ist je Photovoltaikmodulpaar das eine Photovoltaikmodul des Paars oberhalb des mindestens einen Seils und das andere Photovoltaikmodul des Paars unterhalb des mindestens einen Seils angeordnet.

Vorteilhafterweise ist je Photovoltaikmodulpaar das eine Photovoltaikmodul des Paars an der Außenkante des mindestens einen Seils und das andere Photovoltaikmodul des Paars an der Innenkante des mindestens einen Seils angeordnet. Die Innenkante ist insbesondere die Fläche einer in dem ersten Teilabschnitt angeordneten Teilstrecke des mindestens einen Seils, die einem in dem zweiten Teilabschnitt angeordneten Teilstrecke des mindestens einen Seils, am nächsten ist. Die Außenkante ist demgemäß die weitest entfernteste Fläche.

Vorteilhafterweise sind je Photovoltaikmodulpaar das eine Photovoltaikmodul des Paars innerhalb des ersten Teilabschnitts der Aufspannstrecke starr, fest und/oder ortsgebunden an einer in dem ersten Teilabschnitt angeordneten Teilstrecke des mindestens einen Seil und das andere Photovoltaikmodul des Paars innerhalb des zweiten Teilabschnitts der Aufspannstrecke starr, fest und/oder ortsgebunden an einer in dem zweiten Teilabschnitt angeordneten Teilstrecke des mindestens einen Seil angeordnet, insbesondere geklemmt.

Vorteilhafterweise sind die Photovoltaikmodule eines, insbesondere jedes, Photovoltaikmodulpaars entlang der Aufspannstrecke jeweils benachbart, insbesondere übereinander, gegebenenfalls parallelverschoben übereinander, angeordnet.

Vorteilhafterweise weist das System, insbesondere je Photovoltaikmodulpaar, noch mindestens ein unbewegliches, insbesondere ortsfest fixiertes, Photovoltaikmodul auf, insbesondere befestigt an einer Haltevorrichtung, insbesondere einem oder zwei Halteseilen, die insbesondere Ortsfest fixiert ist.

Vorteilhafterweise weist das System ferner mindestens eine, insbesondere zumindest zwischen den Stützvorrichtungen verlaufende, insbesondere an den Stützvorrichtungen angeordnete, insbesondere mit den Stützvorrichtungen steif und/oder starr verbundene, Haltevorrichtung auf. Vorteilhafterweise werden durch die Haltevorrichtung die Stützvorrichtung gegeneinander verspannt, insbesondere aufgrund einer durch die mindestens eine Haltevorrichtung hergestellten verspannenden Verbindung zwischen den Stützvorrichtungen.

Vorteilhafterweise verläuft die Haltevorrichtung zwischen den Stützvorrichtungen und zudem zwischen den den jeweiligen Enden der Längsrichtung am nächsten liegenden Stützvorrichtungen und einem Bereich der Nutzfläche um die jeweilige Stützvorrichtung. Vorteilhafterweise ist die Haltevorrichtung fest mit einem Punkt in dem jeweiligen Bereich, insbesondere im Boden, der Nutzfläche verankert und wird insbesondere hierdurch eine Verspannung zwischen der Nutzfläche und der den jeweiligen Enden der Längsrichtung am nächsten liegenden Stützvorrichtung bereitgestellt.

Vorteilhafterweise verläuft die mindestens eine Haltevorrichtung von der den jeweiligen Enden der Längsrichtung am nächsten liegenden Stützvorrichtung über die erste oder zweite Seilhaltevorrichtung zur Nutzfläche.

Vorteilhafterweise kann an der Haltevorrichtung das mindestens eine unbewegliche Photovoltaikmodul, insbesondere fest, angeordnet sein.

Vorteilhafterweise erstreckt sich die mindestens eine Haltevorrichtung zumindest von der Nutzfläche, insbesondere über die ersten Seilhaltevorrichtung, zwischen den Stützvorrichtungen, insbesondere über die zweite Seilhaltevorrichtung, weiter bis zur Nutzfläche.

Vorteilhafterweise umfasst die Haltevorrichtung mindestens zwei Haltevorrichtungskomponenten, die sich jeweils, insbesondere parallel zueinander, zwischen den Stützvorrichtungen erstrecken.

Vorteilhafterweise umfasst die mindestens eine Haltevorrichtung mindestens ein Seil, insbesondere Stahlseil, insbesondere weisen die mindestens zwei Haltevorrichtungskomponenten mindestens ein Seil, insbesondere Stahlseil auf.

Vorteilhafterweise besteht die mindestens eine Haltevorrichtung aus mindestens einem Seil, insbesondere Stahlseil, insbesondere bestehen die mindestens zwei Haltevorrichtungskomponenten aus mindestens einem Seil, insbesondere Stahlseil.

Vorteilhafterweise ist je Photovoltaikmodulpaar das eine Photovoltaikmodul des Paars oberhalb des mindestens einen Seils und das andere Photovoltaikmodul des Paars unterhalb des mindestens einen Seils angeordnet und ist je Photovoltaikmodulpaar das unbewegliche Photovoltaikmodul oberhalb des einen Photovoltaikmoduls des Paars, das oberhalb des mindestens einen Seils angeordnet ist, angeordnet. Vorteilhafterweise weisen die Photovoltaikmodule des Photovoltaikmodulpaars und das unbewegliche Photovoltaikmodul gleiche Flächenerstreckungen auf, sind insbesondere baugleich.

Das erfindungsgemäße Verfahren sieht ein Verfahren zum Steuern einer Position von Photovoltaikmodulen zueinander vor, nämlich der Positionierung von Photovoltaikmodulen mehrerer Photovoltaikmodulpaare. Insbesondere sieht es die Steuerung der einzelnen Photovoltaikmodule der Photovoltaikmodulpaare, insbesondere einzeln und/oder paarweise, vor.

Vorteilhafterweise sind in dem Verfahren die Photovoltaikmodule je Photovoltaikmodulpaar an einem steuerbar bewegbaren Seil angeordnet.

Vorteilhafterweise sind in dem Verfahren die Photovoltaikmodule je Photovoltaikmodulpaar mit einem Abstand entlang einer Höhenerstreckung, insbesondere einer die Seile haltenden Stützvorrichtung, über einer Agrarfläche angeordnet.

Vorteilhafterweise kann in dem Verfahren je Photovoltaikmodulpaar die Position des einen Photovoltaikmoduls des Paars relativ zur Position des anderen Photovoltaikmoduls des Paars mittels einer Steuerung durch Bewegung des Seils von einem maximalen Stromgewinnungszustand hin zu einem maximalen Sonnenlichtbestrahlungszustand und umgekehrt verändert werden. Vorteilhafterweise erfolgt diese Veränderung so, dass in dem maximalen Sonnenlichtbestrahlungszustand die Position des einen Photovoltaikmoduls einen minimalen Abstand zur Position des anderen Photovoltaikmoduls und in dem maximalen Stromgewinnungszustand die Position des einen Photovoltaikmoduls einen maximalen Abstand zur Position des anderen Photovoltaikmoduls aufweist. Insbesondere überdeckt in dem in dem maximalen Sonnenlichtbestrahlungszustand das eine Photovoltaikmodul des Photovoltaikmodulpaars das andere Photovoltaikmodul des Photovoltaikmodulpaars.

Vorteilhafterweise sind sowohl die Stützvorrichtungen als auch die Seilhaltevorrichtungen fest in der Nutzfläche verankert, wobei die Stützvorrichtungen bevorzugt nur in den Boden gerammt sind.

Vorteilhafterweise werden die Stützvorrichtungen von der Haltevorrichtung gestützt.

Vorteilhafterweise kann in dem Verfahren je Photovoltaikmodulpaar die Position des einen Photovoltaikmoduls des Paars relativ zur Position des anderen Photovoltaikmoduls des Paars und relativ zu einem unbeweglichen Photovoltaikmoduls mittels einer Steuerung durch Bewegung des Seils von einem maximalen Stromgewinnungszustand hin zu einem maximalen Sonnenlichtbestrahlungszustand und umgekehrt verändert werden.

Vorteilhafterweise weist der Haltebereich mindestens einen ersten und einen dem ersten gegenüberliegend angeordneten zweiten Halteabschnitte auf. Vorteilhafterweise wird das mindestens eine Seil im Haltebereich von den Stützvorrichtungen jeweils mittels der Halteabschnitte gehalten. Vorteilhafterweise wird das mindestens eine Seil innerhalb des ersten Teilabschnitts der Aufspannstrecke jeweils durch den ersten Halteabschnitt und innerhalb des zweiten Teilabschnitts der Aufspannstrecke jeweils durch den zweiten Halteabschnitt gehalten.

Vorteilhafterweise beträgt die lichte Höhe der Höhenerstreckung mindestens 1,5 m, insbesondere mindestens 2,0 m, insbesondere mindestens 3,5 m, insbesondere mindestens 4,0 m, insbesondere mindestens 5 m, insbesondere mindestens 6 m.

Vorteilhafterweise ist die Bewegungsvorrichtung mit einer Steuerung gekoppelt, die insbesondere eingerichtet ist, die Bewegungsvorrichtung auf Basis von vorbestimmten Werten und/oder Sensordaten zu steuern, insbesondere so, dass eine Hin- und Herbewegung des mindestens einen Seils bewirkt wird.

Vorteilhafterweise erfolgt die Steuerung auf Basis von, insbesondere sensorisch, erfasster, insbesondere lokaler, Strahlungsintensität, wobei das System und/oder das Verfahren insbesondere mit einer Sensorik, insbesondere einer Strahlungsintensitätsmess- und/oder -bestimmungsvorrichtung, gekoppelt ist.

Vorteilhafterweise wird das mindestens eine System, insbesondere mittels der Bewegungsvorrichtung, insbesondere mittels der Steuerung, insbesondere auf Basis der Sensorik, insbesondere der sensorisch erfassten Strahlungsintensität, durch zumindest teilweisen Bewegens des mindestens einen Seils entlang der Aufspannstrecke von einem maximalen Sonnenlichtbestrahlungszustand, insbesondere der Nutzfläche, hin zu einem maximalen Stromgewinnungszustand, insbesondere auf und/oder bei der Nutzfläche, entlang des Aufspannstrecke zumindest teilweise überführt.

Bei einem maximalen Stromgewinnungszustand kann zudem die Nutzfläche insbesondere durch die Photovoltaikmodule insbesondere maximal beschattet werden/sein.

Vorteilhafterweise sind im maximalen Stromgewinnungszustand die Photovoltaikmodule jedes Paars nicht, zumindest nicht vollständig, übereinander angeordnet. Alternativ oder zusätzlich sind vorteilhafterweise im maximalen Sonnenlichtbestrahlungszustand die Photovoltaikmodule jedes Paars übereinander, zumindest teilweise, insbesondere zum größten Teil, übereinander, angeordnet.

Vorteilhafterweise weist zumindest eines der ersten oder zweiten Seilhaltevorrichtung die Bewegungsvorrichtung auf, wobei die Bewegungsvorrichtung insbesondere eine Antriebsscheibe zum Aufnehmen des mindestens einen Seils aufweist, wobei durch Rotation der Antriebsscheibe das mindestens eine Seil auf der Aufspannstrecke bewegt wird.

Vorteilhafterweise weist die Stützvorrichtungen Baustahl, insbesondere einem Baustahl mit einem Durchmesser von mindestens 10 mm und/oder maximal 30 mm, insbesondere von 20 mm, auf, ist insbesondere durch einen U-förmigen Bügel aus Baustahl gebildet.

Vorteilhafterweise ist je Photovoltaikmodulpaar das eine Photovoltaikmodul des Paars innerhalb des ersten Teilabschnitts der Aufspannstrecke, das ortsgebunden am mindestens einen Seil angeordnet ist, ortsungebunden am zweiten Teilabschnitt befestigt. Alternativ oder zusätzlich ist vorteilhafterweise ist das andere Photovoltaikmodul des Paars, das innerhalb des zweiten Teilabschnitts der Aufspannstrecke ortsgebunden am mindestens einen Seil befestigt ist, am ersten Teilabschnitt ortsungebunden befestigt.

Vorteilhafterweise sind auf jedem Teilabschnitt abwechselnd ortsgebundene und ortsungebundene Photovoltaikmodule angeordnet.

Vorteilhafterweise ist jedes Photovoltaikmodul nur an einem Teilabschnitt ortsgebunden angeordnet und ist insbesondere jedes Photovoltaikmodul an einem Teilabschnitt ortsgebunden und am anderen Teilabschnitt ortsungebunden angeordnet.

Vorteilhafterweise erfolgt die ortsgebundene und/oder ortsungebundene Halterung(en) mittels flacher Klemmen und/oder Anlenkungen, wobei die Klemmen und/oder Anlenkungen zumindest teilweise angeschrägt, insbesondere deren Halterungsfläche, sind, wobei je Photovoltaikmodulpaar die schräge Fläche der ortsgebundene Halterung des einen Photovoltaikmodul des Paars komplementär, insbesondere parallel, zu der ortsungebundene Halterung des anderen Photovoltaikmodul des Paars ausgebildet und/oder angeordnet ist.

Vorteilhafterweise ist das mindestens eine Seil eingerichtet, Strom zu leiten, insbesondere den von den Photovoltaikmodulen erzeugten Strom.

Vorteilhafterweise ist die Bewegungsvorrichtung mit dem Seil derart gekoppelt, dass die für die Bewegung des Seils notwendige Energie für die Bewegungsvorrichtung aus von dem Photovoltaikmodulen erzeugten Strom stammt.

Vorteilhafterweise weist das mindestens eine Seil mindestens eine stromleitende Leitung und insbesondere eine Isolationsschicht, insbesondere um die stromleitende Leitung herum, auf. Vorteilhafterweise stellt das mindestens eine Seil mindestens eine stromleitende Leitung und insbesondere eine Isolationsschicht, insbesondere um die stromleitende Leitung herum, dar. Vorteilhafterweise ist das mindestens eine Seil mindestens in zwei gegeneinander elektrisch isolierte Abschnitte unterteilt. Vorteilhafterweise sind die Teilabschnitte gegeneinander elektrisch isoliert Vorteilhafterweise ist das Seil und/oder sind die Teilabschnitte mit den Photovoltaikmodulen, insbesondere ihren Solarzellen, zur Ableitung erzeugter elektrischer Energie elektrisch verbunden.

Vorteilhafterweise kann je Photovoltaikmodulpaar das eine Photovoltaikmodul des Paars innerhalb des ersten Teilabschnitts mittels eines ersten, insbesondere an dem einen Photovoltaikmodul angeordneten, Rohrs starr, fest und/oder ortsgebunden an der in dem ersten Teilabschnitt angeordneten Teilstrecke und das andere Photovoltaikmodul des Paars innerhalb des zweiten Teilabschnitts mittels eines dritten, insbesondere an dem anderen Photovoltaikmodul angeordneten, Rohrs starr, fest und/oder ortsgebunden an der in dem zweiten Teilabschnitt angeordneten Teilstrecke angeordnet, insbesondere geklemmt, sein.

Vorteilhafterweise kann je Photovoltaikmodulpaar das eine Photovoltaikmodul des Paars innerhalb des ersten Teilabschnitts mittels eines ersten, insbesondere an dem einen Photovoltaikmodul angeordneten, Rohrs starr, fest und/oder ortsgebunden an der in dem ersten Teilabschnitt angeordneten Teilstrecke und innerhalb des zweiten Teilabschnitts mittels eines zweiten, insbesondere an dem einen Photovoltaikmodul und dem ersten Rohr gegenüberliegend angeordneten, Rohrs lagernd an einer in dem zweiten Teilabschnitt angeordneten Teilstrecke angeordnet sein und das andere Photovoltaikmodul des Paars innerhalb des zweiten Teilabschnitts mittels eines dritten, insbesondere an dem anderen Photovoltaikmodul angeordneten, Rohrs starr, fest und/oder ortsgebunden an der in dem zweiten Teilabschnitt angeordneten Teilstrecke angeordnet, insbesondere geklemmt, sein und innerhalb des ersten Teilabschnitts mittels eines vierten, insbesondere an dem anderen Photovoltaikmodul dem dritten Rohr gegenüberliegend angeordneten, Rohrs lagernd an einer in dem ersten Teilabschnitt angeordneten Teilstrecke angeordnet sein.

Vorteilhafterweise wird je Photovoltaikmodulpaar das zweite Rohr als Führung des einen Photovoltaikmoduls innerhalb des zweiten Teilabschnitts und das vierte Rohr als Führung des anderen Photovoltaikmoduls innerhalb des ersten Teilabschnitts verwendet.

Vorteilhafterweise ist je Photovoltaikmodulpaar das erste und zweite Rohr an einer dem anderen Photovoltaikmoduls zugewandten Außenfläche des einen Photovoltaikmoduls angeordnet, insbesondere festgelegt, und das dritte und vierte Rohr an einer dem einen Photovoltaikmoduls zugewandten Außenfläche des anderen Photovoltaikmoduls angeordnet, insbesondere festgelegt.

Vorteilhafterweise ist das erste, zweite, dritte und/oder vierte Rohr jeweils stirnseitig am jeweiligen Photovoltaikmodul angeordnet.

Vorteilhafterweise ist je Photovoltaikmodulpaar das erste und/oder zweite Rohr derart an dem einen Photovoltaikmodul angeordnet, dass das eine Photovoltaikmodul von einer durch die innerhalb des ersten Teilabschnitts liegende Teilstrecke und durch die innerhalb des zweiten Teilabschnitts liegende Teilstrecke aufgespannte Ebene beabstandet angeordnet ist, insbesondere oberhalb der Ebene angeordnet und/oder mit einem Abstand von mindestens 1 cm, insbesondere mindestens 2 cm, insbesondere mindestens 5 cm. Vorteilhafterweise ist je Photovoltaikmodulpaar das dritte und/oder vierte Rohr derart an dem anderen Photovoltaikmodul angeordnet, dass das andere Photovoltaikmodul von einer durch die innerhalb des ersten Teilabschnitts liegende Teilstrecke und durch die innerhalb des zweiten Teilabschnitts liegende Teilstrecke aufgespannte Ebene beabstandet angeordnet ist, insbesondere unterhalb der Ebene angeordnet und/oder mit einem Abstand von mindestens 1 cm, insbesondere mindestens 2 cm, insbesondere mindestens 5 cm.

Vorteilhafterweise ist das erste, zweite, dritte und/oder vierte Rohr jeweils parallel zur jeweiligen Teilstrecke verlaufend und/oder angrenzend an eine Außenkante des jeweiligen Photovoltaikmoduls angeordnet, insbesondere einer parallel zum Verlauf der jeweiligen Teilstrecke verlaufenden Außenkante, insbesondere Stirnseite des jeweiligen Photovoltaikmoduls.

Vorteilhafterweise erstreckt sich je Photovoltaikmodulpaar das erste und/oder das zweite Rohr lediglich über maximal 70%, insbesondere maximal 60%, insbesondere maximal 50%, insbesondere maximal 40%, einer Erstreckung des einen Photovoltaikmoduls und/oder das dritte und/oder das vierte Rohr über mindestens 30%, insbesondere mindestens 40%, insbesondere mindestens 50%, insbesondere mindestens 60%, einer Erstreckung des anderen Photovoltaikmoduls, insbesondere einer Erstreckung parallel zum Verlauf der jeweiligen Teilstrecke und/oder parallel zu einer zu der jeweiligen Teilstrecke parallel verlaufenden Außenkante des jeweiligen Photovoltaikmoduls.

Vorteilhafterweise ist, insbesondere bei der eben genannte Erstreckung der Rohre, das erste Rohr näher an der ersten Seilhaltevorrichtung angeordnet als das dritte Rohr. Zusätzlich ist voreilhafterweise das dritte Rohr näher an der zweiten Seilhaltevorrichtung angeordnet als das erste Rohr. Zusätzlich ist voreilhafterweise das zweite Rohr näher an der ersten Seilhaltevorrichtung angeordnet als das vierte Rohr. Zusätzlich ist voreilhafterweise das zweite Rohr näher an der zweiten Seilhaltevorrichtung angeordnet als das vierte Rohr. Die Alternative hierzu ist, dass das erste Rohr näher an der zweiten Seilhaltevorrichtung als das dritte Rohr, das dritte Rohr näher an der ersten Seilhaltevorrichtung als das erste Rohr, das zweite Rohr näher an der zweiten Seilhaltevorrichtung als das vierte Rohr und das zweite Rohr näher an der ersten Seilhaltevorrichtung als das vierte Rohr angeordnet sind. Die Rohre sind demnach vorteilhafterweise komplementär zueinander angeordnet, sodass sich die Rohre beim Bewegen der beiden Photovoltaikmodule je Photovoltaikmodulpaar eine Überlappung der beiden Photovoltaikmodule zulassen und gegebenenfalls gar jeweils als Anschlagspunkt des jeweils anderen Rohrs fungieren.

Vorteilhafterweise ist das erste Rohr mit dem Seil verklemmt an der in dem ersten Teilabschnitt angeordneten Teilstrecke angeordnet. Vorteilhafterweise ist das dritte Rohr mit dem Seil verklemmt an der in dem zweiten Teilabschnitt angeordneten Teilstrecke angeordnet.

Vorteilhafterweise wird das erfindungsgemäße Verfahren in und/oder mit einem erfindungsgemäßen System ausgeführt.

Vorteilhafterweise ist das erfindungsgemäße System eingerichtet zum Ausführen und/oder Durchführen des erfindungsgemäßen Verfahrens.

Vorteilhafterweise sind die Solarzellen beider Module eines Paars nach oben orientiert.

Weitere vorteilhafte Ausführungsformen ergeben sich exemplarisch aus der nachstehenden Beschreibung eines Ausführungsbeispiels anhand der beigefügten schematischen Figuren. Dabei zeigt:
Fig. 1 eine perspektive Ansicht des erfindungsgemäßen Systems,
Fig. 2 zwei Aufsichten auf das System, nämlich in a) im maximalen Stromgewinnungszustand und in b) im maximalen Sonnenlichtbestrahlungszustand,
Fig. 3 eine Seitenansicht eines möglichen Ausführungsbeispiels der Halterung der Photovoltaikmodule eines Photovoltaikmodulpaars,
Fig. 4 eine Seitenansicht eines weiteren möglichen Ausführungsbeispiels der Halterung der Photovoltaikmodule eines Photovoltaikmodulpaars,
Fig. 5 eine Aufsicht eines Ausführungsbeispiels bei der die Photovoltaikmodule eines Photovoltaikmodulpaars in den maximalen Sonnenlichtbestrahlungszustand bewegt worden sind,
Fig. 6 eine Untersicht eines weiteren möglichen Ausführungsbeispiels der Halterung der Photovoltaikmodule eines Photovoltaikmodulpaars,
Fig. 7 eine Draufsicht des Ausführungsbeispiels der Halterung der Photovoltaikmodule eines Photovoltaikmodulpaars der Fig. 6 und
Fig. 8 eine Seitenansicht eines weiteren möglichen Ausführungsbeispiels der Halterung der Photovoltaikmodule eines Photovoltaikmodulpaars zusammen mit der Halterung des unbeweglichen Photovoltaikmoduls.

Dabei werden die Ausführungsbeispiele in den Figuren skizzenhaft dargestellt, so dass einzelne Merkmale der Erfindung besonders einfach und deutlich ersichtlich sind. Die Größenverhältnisse müssen somit nicht realitätsnah dargestellt sein. In den Figuren sind gleiche Elemente mit gleichen Bezugszeichen versehen.

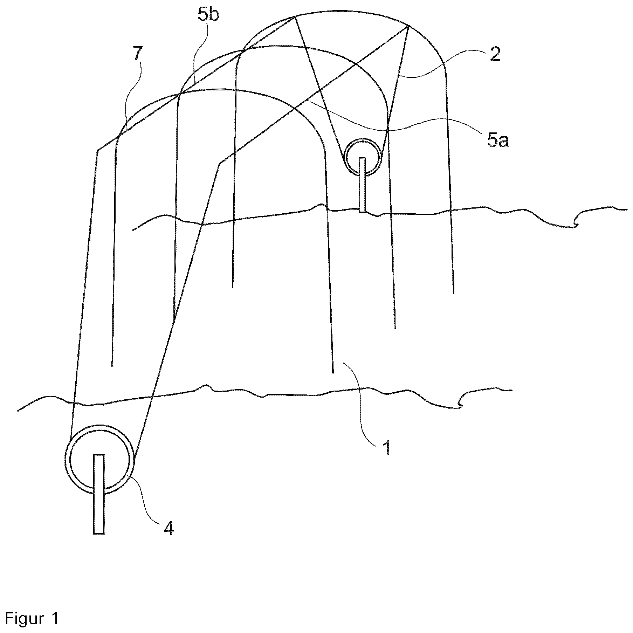

In der Figur 1 ist eine perspektivische Ansicht des erfindungsgemäßen Systems dargestellt. Gezeigt ist das mehrere Stützvorrichtungen 1 entlang der Längserstreckung des Systems, die jeweils voneinander beanstandet über eine Nutzfläche, beispielsweise eine Agrarfläche, angeordnet sind. Über und entlang dieser Stützvorrichtungen 1 ist ein Seil 2 gespannt. Dieses Seil 2 wird mittels zwei Seilhaltevorrichtungen 4 gehalten und gespannt. Dieses Seilhaltevorrichtungen 4 sind jeweils an den Endabschnitten der Längserstreckung des Systems angeordnet. Dabei ist das Seil 2 hier als ein Seilzug dargestellt, der um die zwei Seilhaltevorrichtungen 4 jeweils umgelenkt wird, sodass sich eine auf Aufspannstrecke ergibt, über die der Seilzug verläuft und die jeweils zweimal, über je einen Teilabschnitt der Aufspannstrecke, über die Stützvorrichtungen 1 führt und erstreckt. Das Seil ist an den Stützvorrichtungen mittels Anlenkungen 7 gehalten. Das Seil 2 erstreckt sich somit über einen ersten Teilabschnitt 5a der Aufspannstrecke und über einen zweiten Teilabschnitt 5b der Aufspannstrecke. Die Stützvorrichtung 1 sind in der Figur 1 als Bögen ausgebildet dargestellt, die in den Boden der Nutzfläche gerammt sind. Nicht dargestellt sind die Anordnungen von Paaren von Photovoltaikmodulen.

Ferner ist in der Figur 1 auch eine optionale Verbesserung des Systems gezeigt. Es ist nämlich möglich die Stützvorrichtungen 1 stabiler zu verankern, ohne jedoch, dass die Stützvorrichtungen 1 mehr Verankerungsfläche aufweisen müssen. Es ist nämlich auch vorstellbar, dass die Stützvorrichtungen gegeneinander mittels einer Haltevorrichtung 10, z.B. Seil. verspannt werden. Hierdurch werden die Stützvorrichtungen 1 stabiler, da diese sich gegenseitig halten. Hierfür sind die Stützvorrichtungen 1 vorzugsweise fest, insbesondere steif, mit der Haltevorrichtung 10 verbunden. Zudem ist es möglich mittels der Haltevorrichtung jede der Stützvorrichtungen 1 einzeln, oder die gegeneinander verspannten Stützvorrichtungen 1 (wie in der Figur 1 gezeigt) durch Verspannen der Stützvorrichtungen 1 am jeweiligen Ende der Aufspannstrecke mit dem Boden der Nutzfläche zusätzlich zu stabilisieren. Insbesondere kann durch dieses Verspannen durch eine Haltevorrichtung 10 aus Seilen, insbesondere Stahlseilen erreicht werden.

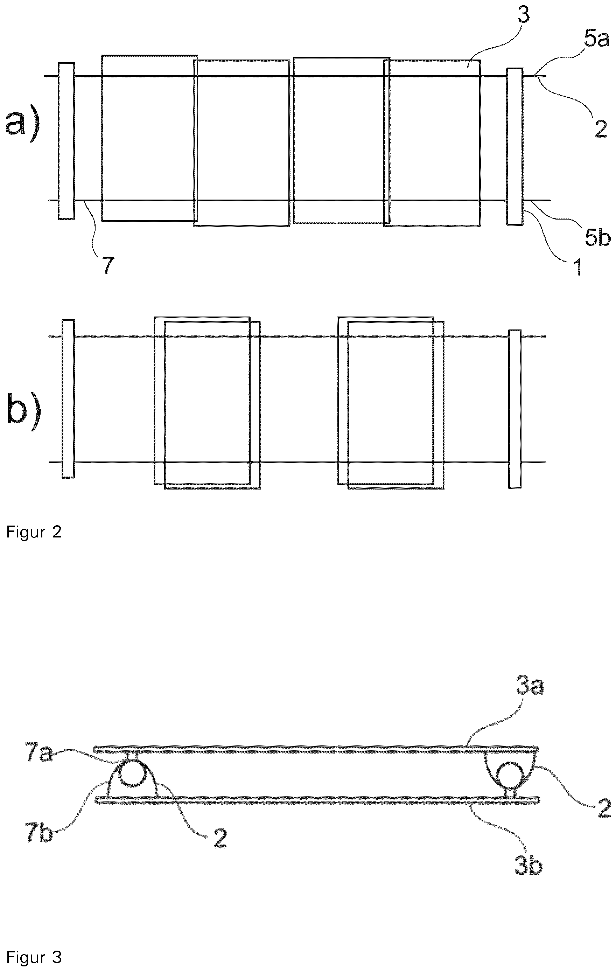

Die Halterung und Anordnung der Photovoltaikmodule 3 sind in der Figur 2 schematisch in einer Aufsicht dargestellt.

Die Photovoltaikmodule 3 sind jeweils mit einem der Teilabschnitte 5a, 5b des Seils 2 ortsfest verbunden. Werden die Teilabschnitte wie durch die endständigen Pfeile angedeutet bewegt, dann fahren die Photovoltaikmodule eines Paars jeweils weitgehend übereinander, was in der Fig. 2b dargestellt ist.

Ein erster Zustand, in dem die Photovoltaikmodule 3 eines jeden Paars nicht aufeinander zu bewegt sind, ist im Figurenabschnitt a) dargestellt, und ein zweiter Zustand, in dem die Photovoltaikmodule 3 eines jeden Paars aufeinander zu bewegt wurden, ist im Figurenabschnitt b) dargestellt. Dabei beschreibt der Zustand, der in dem Figurenabschnitt a) dargestellt ist, einen maximalen Stromgewinnungszustand, bei dem zudem eine maximale Beschattung der unter den Photovoltaikmodulen liegenden Nutzfläche erreicht wird. Der Zustand, der im Figurenabschnitt b) dargestellt ist, beschreibt einen maximalen Sonnenlichtbestrahlungszustand, in dem insbesondere besonders viel Sonnenlicht auf die darunterliegende Nutzfläche gelangen kann. Dabei sind die Photovoltaikmodule 3 eines jeden Paars vorteilhafterweise in diesem Zustand fast vollständig deckungsgleich übereinander angeordnet.

In der Figur 3 ist eine mögliche Ausgestaltung der Halterung der Photovoltaikmodule auf dem Seil 2 als ein Ausführungsbeispiel dargestellt. Die jeweiligen Photovoltaikmodule 3a, 3b eines jeden Paars sind an einer bestimmten Teilstrecke des Seils 2 angeordnet, wobei ein erstes Photovoltaikmodul 3a des Paars der Photovoltaikmodule 3 an innerhalb eines Teilabschnitts, beispielsweise des ersten Teilabschnitts, der Aufspannstrecke fest, starr bzw. ortsgebunden an dieser Teilstrecke des Seils 2 mittels eines Halteelements 7a angeordnet ist. Dies bedeutet, dass bei einem Bewegen des links dargestellten Teilabschnitts des Seils das Photovoltaikmodule 3a aufgrund des ortsgebundenen, starren bzw. steifen Halteelements 7a dieselbe Bewegung ausführt. Gleichzeitig ist das Photovoltaikmodule 3a an dem anderen Teilabschnitt, beispielsweise dem zweiten Teilabschnitt, lediglich lagernd, insbesondere gleitend, mittels der Anlenkung 7b gehalten. Diese Anlenkung 7b sorgt dabei lediglich für eine lagernde, insbesondere gleitende, Halterung, sodass das Photovoltaikmodul 3a die senkrecht zur Zeichenebene verlaufende Bewegung des rechts dargestellten zweiten Teilabschnitts nicht ausführt.

Das andere Photovoltaikmodule 3b des Paars der Photovoltaikmodule 3 ist nun in analoger Weise umgekehrt an den Teilabschnitten des Seils 2 angeordnet, wobei die starre, steife bzw. ortsgebundene Anbindung an das Seil an dem links dargestellten Teilabschnitt stattfindet. So kann beispielsweise die starre, steife bzw. ortsgebundene Anbindung an das Seil 2 an einer Teilstrecke des Seils 2 erfolgen, die innerhalb des zweiten Teilabschnitts angeordnet ist. Die lagernde, insbesondere gleitende, Halterung, insbesondere Lagerung, erfolgt dann auf einer Teilstrecke des Seils, die innerhalb des ersten Teilabschnitts angeordnet ist, also in der Darstellung links.

In einer einfachsten Ausgestaltung eines solchen Ausführungsbeispiels ist dann das eine Photovoltaikmodule 3a oberhalb und das andere Photovoltaikmodule 3b unterhalb des Seils angeordnet.

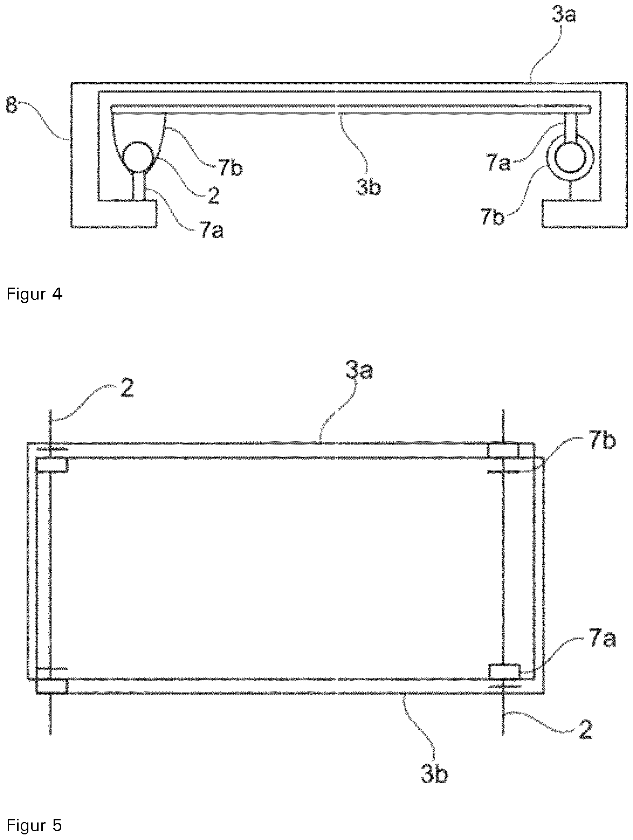

Eine alternative Halterung der Photovoltaikmodule 3 eines jeden Paars an dem Seil 2 ist in der Figur 4 beschrieben. Dort ist eines der Photovoltaikmodule 3a in einem Rahmen 8 aufgenommen, der die jeweiligen Teilstrecken des Seils 2 zumindest teilweise umgibt. In einem solchen Ausführungsbeispiel können beide Photovoltaikmodule 3a, 3b oberhalb oder alternativ auch beide unterhalb des Seils angeordnet werden. Hierfür ist die Halterung, also sowohl die starre, steife bzw. ortsgebundene Halterung 7a als auch die lagernde, insbesondere gleitende, Halterung 7b des einen Photovoltaikmoduls 3a an dem Rahmen 8 angeordnet.

In der Figur 5 ist ein weiteres Ausführungsbeispiel dargestellt jedoch in einer Aufsicht mit durchsichtig dargestellten Photovoltaikmodulen, aus der ersichtlich wird, dass die Photovoltaikmodule 3a, 3b, die über bzw. unter dem Seil 2 angeordnet sind über/mittels ihre Halterungen 7a (fett dargestellt) und Anlenkungen 7b (dünn dargestellt) weitgehend übereinander geschoben und weitgehend nebeneinander angeordnet werden können, da die Halterungen in Längsrichtung der Teilabschnitte des Seils 2 randständig an den Photovoltaikmodulen angeordnet sind, sodass sie sich in den Endzuständen seitlich berühren oder in optimierter Ausführung (hier nicht gezeigt) auch ganz oder teilweise übereinander zu liegen kommen, wobei die sich berührenden Paar ein den beiden Endzuständen unterschiedlich sind. Der seitliche Versatz der Module ist nur der besseren Darstellung geschuldet und technisch nicht erforderlich.

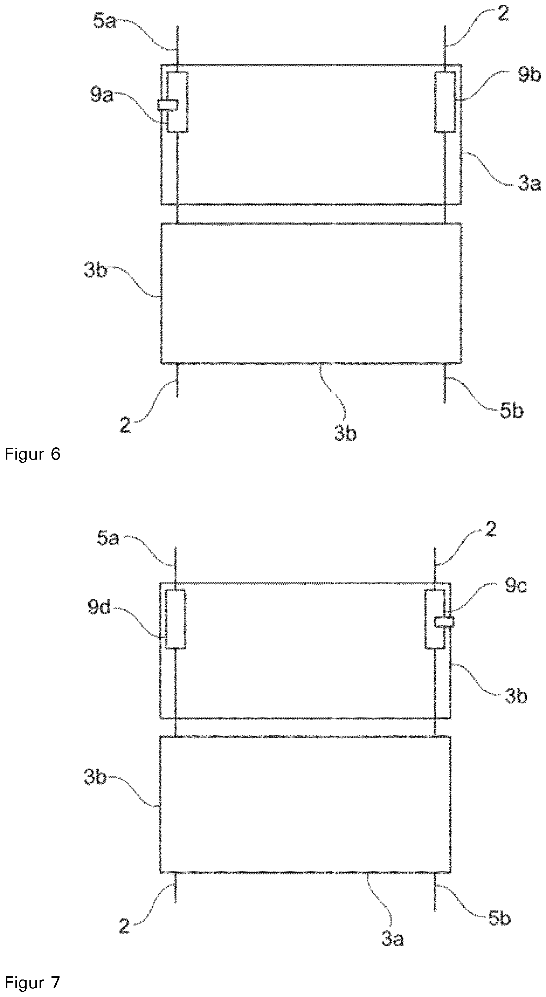

In den Figuren 6 und 7 ist ein weiteres Ausführungsbeispiel einer möglichen Ausgestaltung einer Halterung der Photovoltaikmodule 3a, 3b eines Photovoltaikmodulpaars an dem Seil 2 in der jeweiligen Teilstrecke des jeweiligen Teilabschnitts 5a, 5b dargestellt, nämlich in der Figur 6 in einer Untersicht, also einer Ansicht von unten auf das Photovoltaikmodulpaar, und in der Figur 7 in einer Draufsicht, also einer Ansicht von oben auf das Photovoltaikmodulpaar. Dabei zeigen die endständigen Pfeile an dem Seil 2 abermals die Bewegungsrichtung des Seils 2, entlang dieser die Photovoltaikmodule hin zum zweiten Zustand bewegt werden.

In diesem Beispiel ist die Anordnung, die Halterung, der Photovoltaikmodule 3a, 3b eines Photovoltaikmodulpaars an dem Seil 2 mittels Rohre 9a, 9b, 9c, 9d realisiert, in denen das Seil 2 geführt / gelagert wird. Die Rohre 9a, 9b, 9c, 9d sind dabei jeweils an den jeweils einander gegenüberliegenden Ecken eines Photovoltaikmoduls 3a, 3b angeordnet, wobei an jedem Photovoltaikmodul 3a, 3b, je zwei Rohre angeordnet sind, wobei eines der beiden Rohre die Anordnung, die Halterung, an dem ersten Teilabschnitt 5a und das andere Rohr die Anordnung, die Halterung, an dem zweiten Teilabschnitt 5b, bewirkt und daher jeweils an dem jeweiligen Teilabschnitt anliegt bzw. diesen teilweise umgibt.

An dem einen, dem ersten Photovoltaikmodul 3a ist nun das erste Rohr 9a und das zweite Rohr 9b angeordnet, nämlich an der Unterseite des ersten Photovoltaikmoduls 3a, sodass das erste Rohr 9a und das zweite Rohr 9b dem anderen, dem zweiten Photovoltaikmodul 3b zugewandt angeordnet ist und nicht abgewandt angeordnet ist. An dem anderen, dem zweiten Photovoltaikmodul 3b ist nun (vgl. Draufsicht der Fig. 7) das dritte Rohr 9c und das vierte Rohr 9d angeordnet, nämlich an der Oberseite des zweiten Photovoltaikmoduls 3b, sodass das dritte Rohr 9c und das vierte Rohr 9c dem ersten Photovoltaikmodul 3a zugewandt angeordnet ist und nicht abgewandt angeordnet ist. Der Grund für diese Anordnung ist, dass hierdurch gewährleistet werden kann, dass die Photovoltaikmodule 3a, 3b eines Photovoltaikmodulpaars aufeinander zu und übereinander bewegt werden können.

Das erste Rohr 9a ist dabei mit der innerhalb des ersten Teilabschnitts 5a liegenden Teilstrecke des Seils 2 verbunden und das zweite Rohr 9b ist mit der innerhalb des zweiten Teilabschnitts 5b liegenden Teilstrecke des Seils 2 verbunden. Dabei ist das erste Rohr 9a mit dem Seil 2 starr, steif bzw. ortsgebunden verbunden, insbesondere kraftschlüssig. Hierfür kann beispielsweise eine Schraube verwendet werden, die ausgehend von einer Bohrung in dem Rohr auf das Seil drückt. Es sind jedoch auch andere Umsetzungen, wie eine Klemme, vorstellbar, weshalb in der Zeichnung lediglich ein schwarzer Kasten vorgesehen ist, um die starre, steife bzw. ortsgebundene Verbindung und Halterung anzudeuten. Im Gegensatz zum ersten Rohr 9a ist nun das zweite Rohr 9b nicht starr, steif bzw. ortsgebunden mit dem Seil 2 verbunden, da dort das Seil 2 nur lagernd gehalten, also geführt wird, um so eine Bewegung des ersten Photovoltaikmoduls 3a in Relation zum zweiten Photovoltaikmodul 3b zu ermöglichen.

An dem zweiten Photovoltaikmodul 3b ist nun das dritte Rohr 9c mit der innerhalb des zweiten Teilabschnitts 5b liegenden Teilstrecke des Seils 2 verbunden und das vierte Rohr 9d ist mit der innerhalb des ersten Teilabschnitts 5a liegenden Teilstrecke des Seils 2 verbunden. Dabei ist das dritte Rohr 9c mit dem Seil 2 starr, steif bzw. ortsgebunden verbunden, insbesondere kraftschlüssig. Dies kann wie beim ersten Rohr 9a realisiert werden. Im Gegensatz zum dritten Rohr 9c ist nun das vierte Rohr 9d nicht starr, steif bzw. ortsgebunden mit dem Seil 2 verbunden, da dort das Seil 2 nur lagernd gehalten, also geführt wird.

Zu erkennen ist nun, dass die beiden Rohre, die eine starre, steife bzw. ortsgebundene Halterung herstellen, also das erste Rohr 9a und das dritte Rohr 9c, gekreuzt gegenüberliegend, einerseits am ersten Photovoltaikmodul 3a und anderseits am zweiten Photovoltaikmodul 3b, angeordnet sind, und somit lediglich eine ortsfeste Anordnung je Photovoltaikmodulpaar und je Teilabschnitt vorhanden ist.

Wie aus den Figuren 6 und 7 ersichtlich weisen die Rohre 9a, 9b, 9c und 9d nun zwar eine Erstreckung parallel zu dem jeweils anliegenden Teilabschnitt 5a, 5b auf, erstrecken sich jedoch nicht über die gesamte parallel zu dem jeweils anliegenden Teilabschnitts 5a, 5b verlaufenden Erstreckung des jeweiligen Photovoltaikmoduls 3a 3b, sondern nur etwa zur Hälfe der jeweiligen Erstreckung des Photovoltaikmoduls. Zudem ist das jeweils komplementäre Rohr, also die Rohre die am selben Teilabschnitt anliegen, somit einerseits das erste Rohr 9a und das vierte Rohr 9d, bzw. anderseits das zweite Rohr 9b und das dritte Rohr 9c, am jeweils dem jeweils anderem Photovoltaikmodul gegenüberliegende Ende des jeweiligen Photovoltaikmoduls angeordnet, sodass sich die jeweilige Anordnung und Längen der komplementären Rohre 9a, 9d bzw. 9b, 9c ergänzen. Hierdurch ist es möglich die beiden Photovoltaikmodule 3a, 3b dicht übereinander anzuordnen und dennoch eine Überdeckung der Photovoltaikmodule 3a, 3b im zweiten Zustand zu erlauben. Insbesondere können die jeweils zugewandten Enden der jeweiligen komplementären Rohre 9a, 9d bzw. 9b, 9c jeweils als Begrenzung der Bewegung entlang der Teilabschnitte 5a, 5b dienen.

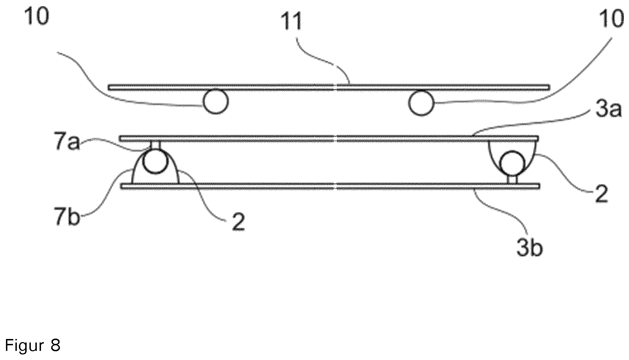

In der Figur 8 ist ein weiteres Ausführungsbeispiel in einer Seitenansicht entlang der Längsrichtung des Systems dargestellt. In diesem Ausführungsbeispiel weist das System neben den Photovoltaikmodulen 3a, 3b des Photovoltaikmodulpaars noch ein weiteres Photovoltaikmodul auf, nämlich ein oberhalb des Photovoltaikmodulpaars angeordnetes unbewegliches Photovoltaikmodul 11. Dabei ist insbesondere bei jedem Photovoltaikmodulpaar des Systems je ein unbewegliches Photovoltaikmodul 11 oberhalb der Photovoltaikmodule 3a, 3b dieses Photovoltaikmodulpaars angeordnet. Das unbewegliche Photovoltaikmodul 11 ist dabei fest mit einer Haltevorrichtung 10 verbunden (beispielsweise einer Haltevorrichtung 10 wie in Figur 1 dargestellt) und kann somit nicht bewegt werden. Das unbewegliche Photovoltaikmodul könnte dabei beispielsweise auch unterhalb des Paares oder dazwischen angeordnet sein.

## Patentansprüche

1. System zur Energiegewinnung auf und Beschattung einer Nutzfläche aufweisend eine erste an einem ersten Ende einer Längsrichtung des Systems angeordnete Seilhaltevorrichtung (4) und eine zweite an einem zweiten dem ersten Ende gegenüberliegenden Ende der Längsrichtung des Systems angeordnete Seilhaltevorrichtung (4), mindestens eine zwischen der ersten und zweiten Seilhaltevorrichtung (4) angeordnete Stützvorrichtung (1), mindestens ein Seil (2), mindestens ein Paar Photovoltaikmodule (3, 3a, 3b) und mindestens eine Bewegungsvorrichtung,
wobei jede Stützvorrichtung (1) eine Höhenerstreckung bis zu einem oberen Haltebereich aufweist und das mindestens eine Seil (2) über eine Aufspannstrecke (5a, 5b) zwischen der ersten und der zweiten Seilhaltevorrichtung (4) aufgespannt und zumindest teilweise in dem Haltebereich lagernd gehalten wird,
wobei sich die Aufspannstrecke (5a, 5b) in einem ersten Teilabschnitt (5a) von der ersten Seilhaltevorrichtung (4) über jeweils benachbarte Stützvorrichtungen (1) hin zur zweiten Seilhaltevorrichtung (4) erstreckt und in einem zweiten Teilabschnitt (5b) über die jeweils benachbarte Stützvorrichtungen (1) hin zur ersten Seilhaltevorrichtung (4) erstreckt, wobei das mindestens eine Seil (2) entlang der Aufspannstrecke (5a, 5b) mittels der Bewegungsvorrichtung bewegbar ist,
**dadurch gekennzeichnet,**
**dass** je Photovoltaikmodulpaar (3, 3a, 3b) die beiden Photovoltaikmodule (3a, 3b) an dem mindestens einen Seil (2) angeordnet sind,
wobei und dass je Photovoltaikmodulpaar (3, 3a, 3b) das eine Photovoltaikmodul (3a) des Paars innerhalb des ersten Teilabschnitts (5a) der Aufspannstrecke, starr, fest und/oder ortsgebunden an einer in dem ersten Teilabschnitt (5a) angeordneten Teilstrecke des mindestens einen Seils (2) und das andere Photovoltaikmodul (3b) des Paars innerhalb des zweiten Teilabschnitts (5b) der Aufspannstrecke, starr, fest und/oder ortsgebunden an einer in dem zweiten Teilabschnitt (5b) angeordneten Teilstrecke des mindestens einen Seils (2) angeordnet sind und wobei die Photovoltaikmodule eines Photovoltaikmodulpaars (3, 3a, 3b) entlang der Aufspannstrecke (5a, 5b) jeweils benachbart angeordnet sind.

2. System nach dem voranstehenden Anspruch, wobei der Haltebereich mindestens einen ersten und einen dem ersten gegenüberliegend angeordneten zweiten Halteabschnitte aufweist und das mindestens eine Seil (2) im Haltebereich von den Stützvorrichtungen (1) jeweils mittels der Halteabschnitte gehalten wird, wobei das mindestens eine Seil (2) innerhalb des ersten Teilabschnitts (5a) der Aufspannstrecke jeweils durch den ersten Halteabschnitt und innerhalb des zweiten Teilabschnitts (5b) der Aufspannstrecke jeweils durch den zweiten Halteabschnitt gehalten wird.

3. System nach einem der voranstehenden Ansprüche, wobei die lichte Höhe der Höhenerstreckung mindestens 1,5 m beträgt.

4. System nach einem der voranstehenden Ansprüche, wobei die Bewegungsvorrichtung mit einer Steuerung gekoppelt ist, die eingerichtet ist, die Bewegungsvorrichtung auf Basis von vorbestimmten Werten und/oder Sensordaten zu steuern.

5. System nach dem voranstehenden Anspruch, wobei im maximalen Stromgewinnungszustand die Photovoltaikmodule (3, 3a, 3b) jedes Paars nicht, zumindest nicht vollständig, übereinander angeordnet sind und/oder im maximalen Sonnenlichtbestrahlungszustand die Photovoltaikmodule (3, 3a, 3b) jedes Paars übereinander, zumindest teilweise übereinander, angeordnet sind.

6. System nach einem der voranstehenden Ansprüche, wobei das System mindestens eine zwischen jeder Stützvorrichtung (1) verlaufende Haltevorrichtung aufweist.

7. System nach einem der voranstehenden Ansprüche, wobei das System je Photovoltaikmodulpaar (3, 3a, 3b) mindestens ein unbewegliches, insbesondere ortsfest fixiertes, Photovoltaikmodul (3a), aufweist, wobei beispielsweise das mindestens eine unbewegliche Photovoltaikmodul (3a) an der Haltevorrichtung nach dem vorangehenden Anspruch, insbesondere fest, angeordnet sein kann.

8. System nach einem der voranstehenden Ansprüche, wobei die Stützvorrichtungen Baustahl aufweist.

9. System nach einem der voranstehenden Ansprüche, wobei je Photovoltaikmodulpaar (3, 3a, 3b) das eine Photovoltaikmodul (3a) des Paars innerhalb des ersten Teilabschnitts (5a) der Aufspannstrecke, das ortsgebunden am mindestens einen Seil (2) angeordnet ist, ortsungebunden am zweiten Teilabschnitt (5b) befestigt ist und das andere Photovoltaikmodul (3b) des Paars, das innerhalb des zweiten Teilabschnitts (5b) der Aufspannstrecke ortsgebunden am mindestens einen Seil (2) befestigt ist, am ersten Teilabschnitt (5a) ortsungebunden befestigt ist.

10. System nach einem der voranstehenden Ansprüche, wobei auf jedem Teilabschnitt abwechselnd ortsgebundene und ortsungebundene Photovoltaikmodule (3, 3a, 3b) angeordnet sind.

11. System nach einem der voranstehenden Ansprüche, wobei jedes Photovoltaikmodul (3, 3a, 3b) nur an einem Teilabschnitt (5a, 5b) ortsgebunden angeordnet ist und insbesondere jedes Photovoltaikmodul (3, 3a, 3b) an einem Teilabschnitt (5a, 5b) ortsgebunden und am anderen Teilabschnitt (5b, 5a) ortsungebunden angeordnet ist.

12. System nach einem der voranstehenden Ansprüche, wobei die ortsgebundene und/oder ortsungebundene Halterung(en) mittels flachen Klemmen und/oder Anlenkungen (7, 7b) erfolgt, wobei die Klemmen und/oder Anlenkungen (7, 7b) zumindest teilweise angeschrägt sind, wobei je Photovoltaikmodulpaar (3, 3a, 3b) die schräge Fläche der ortsgebundene Halterung des einen Photovoltaikmodul des Paars komplementär zu der ortsungebundene Halterung des anderen Photovoltaikmodul des Paars ausgebildet und/oder angeordnet ist.

13. System nach einem der voranstehenden Ansprüche, wobei das mindestens eine Seil (2) eingerichtet ist, Strom zu leiten, insbesondere den von den Photovoltaikmodulen (3, 3a, 3b) erzeugten Strom.

14. System nach einem der voranstehenden Ansprüchen, wobei das mindestens eine Seil (2) mindestens eine stromleitende Leitung und insbesondere eine Isolationsschicht, insbesondere um die stromleitende Leitung herum, aufweist und/oder darstellt und/oder in zwei gegeneinander elektrisch isolierte Abschnitte unterteilt ist und/oder die Teilabschnitt gegeneinander elektrisch isoliert sind und/oder das Seil (2) und/oder die Teilabschnitte mit den Photovoltaikmodulen(3, 3a, 3b) zur Ableitung erzeugter elektrischer Energie elektrisch verbunden sind.

15. Verfahren zum Steuern der Positionierung von Photovoltaikmodulen (3, 3a, 3b) mehrere Photovoltaikmodulpaare, wobei die Photovoltaikmodule (3, 3a, 3b) je Photovoltaikmodulpaar an mindestens einem steuerbar bewegbaren Seil (2) angeordnet sind und mit einem Abstand entlang einer Höhenerstreckung über einer Nutzfläche angeordnet sind, **dadurch gekennzeichnet, dass** je Photovoltaikmodulpaar (3, 3a, 3b) die Position des einen Photovoltaikmoduls des Paars relativ zur Position des anderen Photovoltaikmoduls des Paars mittels einer Steuerung durch Bewegung des mindestens einen Seils (2) von einem maximalen Stromgewinnungszustand hin zu einem maximalen Sonnenlichtbestrahlungszustand und umgekehrt so verändert werden kann, dass in dem maximalen Sonnenlichtbestrahlungszustand die Position des einen Photovoltaikmoduls (3, 3a, 3b) einen minimalen Abstand zur Position des anderen Photovoltaikmoduls und in dem maximalen Stromgewinnungszustand die Position des einen Photovoltaikmoduls (3, 3a, 3b) einen maximalen Abstand zur Position des anderen Photovoltaikmoduls aufweist.

## Claims

1. System for generating energy and shading a usable area, comprising a first rope holding device (4) arranged at a first end of a longitudinal direction of the system and a second rope holding device (4) arranged at a second end of the longitudinal direction of the system opposite the first end, at least one support device (1) arranged between the first and second rope holding devices (4), at least one rope (2), at least one pair of photovoltaic modules (3, 3a, 3b) and at least one movement device,
wherein each support device (1) has a height extension up to an upper holding area and said at least one rope (2) is stretched over a tensioning section (5a, 5b) between the first and second rope holding devices (4) and is held at least partially supported in the holding area,
wherein the tensioning section (5a, 5b) extends in a first section (5a) from the first cable retaining device (4) via adjacent support devices (1) to the second rope holding device (4) and extends in a second section (5b) via the adjacent support devices (1) to the first rope holding device (4), wherein said at least one rope (2) is movable along the tensioning section (5a, 5b) by means of the movement device,
**characterised in that**, for each pair of photovoltaic modules (3, 3a, 3b), both photovoltaic modules (3a, 3b) are arranged on said at least one cable (2), and **in that**, for each pair of photovoltaic modules (3, 3a, 3b), the one photovoltaic module (3a) of the pair is arranged within the first section (5a) of the tensioning section, rigidly, firmly and/or fixedly attached to a section of said at least one cable (2) arranged in the first section (5a) (2) arranged in the first section (5a) of the tensioning section, and the other photovoltaic module (3b) of the pair is arranged within the second section (5b) of the tensioning section, rigidly, firmly and/or fixedly attached to a section of said at least one cable (2) arranged in the second section (5b), and wherein the photovoltaic modules of a photovoltaic module pair (3, 3a, 3b) are arranged adjacent to one another along the tensioning section (5a, 5b).

2. System according to the preceding claim, wherein the holding area has at least one first holding section and a second holding section arranged opposite the first holding section, and said at least one cable (2) in the holding area is held by the support devices (1) by means of the holding sections, wherein said at least one cable (2) is held within the first section (5a) of the tensioning section by the first holding section and within the second section (5b) of the tensioning section by the second holding section.

3. System according to one of the preceding claims, wherein the clear height of the height extension is at least 1.5 m.

4. System according to one of the preceding claims, wherein the movement device is coupled to a control system that is configured to control the movement device on the basis of predetermined values and/or sensor data.

5. System according to the preceding claim, wherein in the maximum power generation state the photovoltaic modules (3, 3a, 3b) of each pair are not, at least not completely, arranged one above the other and/or in the maximum sunlight irradiation state the photovoltaic modules (3, 3a, 3b) of each pair are arranged one above the other, at least partially one above the other.

6. System according to one of the preceding claims, wherein the system has at least one retaining device extending between each support device (1).

7. System according to one of the preceding claims, wherein the system comprises at least one immovable, in particular fixed, photovoltaic module (3a) per pair of photovoltaic modules (3, 3a, 3b), wherein, for example, said at least one immovable photovoltaic module (3a) may be arranged on the holding device according to the preceding claim, in particular fixedly.

8. System according to one of the preceding claims, wherein the support devices comprise structural steel.

9. System according to one of the preceding claims, wherein each photovoltaic module pair (3, 3a, 3b) one photovoltaic module (3a) of the pair is arranged within the first section (5a) of the tensioning section, which is fixed to said at least one cable (2) in a fixed position, and is attached to the second section (5b) in a non-fixed position, and the other photovoltaic module (3b) of the pair, which is fixed in a fixed position to at least one cable (2) within the second section (5b) of the tensioning section, is fixed in a non-fixed position to the first section (5a).

10. System according to one of the preceding claims, wherein fixed and non-fixed photovoltaic modules (3, 3a, 3b) are arranged alternately on each section.

11. System according to one of the preceding claims, wherein each photovoltaic module (3, 3a, 3b) is only fixed in position on one section (5a, 5b) and, in particular, each photovoltaic module (3, 3a, 3b) is fixed in position on one section (5a, 5b) and not fixed in position on the other section (5b, 5a).

12. System according to one of the preceding claims, wherein the fixed and/or non-fixed mounting(s) is/are provided by means of flat clamps and/or linkages (7, 7b), wherein the clamps and/or linkages (7, 7b) are at least partially bevelled, wherein for each pair of photovoltaic modules (3, 3a, 3b), the slanted surface of the location-bound bracket of one photovoltaic module of the pair is designed and/or arranged to be complementary to the location-independent bracket of the other photovoltaic module of the pair.

13. System according to one of the preceding claims, wherein said at least one cable (2) is designed to conduct electricity, in particular the electricity generated by the photovoltaic modules (3, 3a, 3b).

14. System according to one of the preceding claims, wherein said at least one cable (2) has and/or comprises at least one current-conducting conductor and, in particular, an insulating layer, in particular around the current-conducting conductor, and/or is divided into two sections that are electrically insulated from each other, and/or the sections are electrically insulated from each other, and/or the cable (2) and/or the sections are electrically connected to the photovoltaic modules (3, 3a, 3b) for conducting generated electrical energy.

15. Method for controlling the positioning of photovoltaic modules (3, 3a, 3b) several pairs of photovoltaic modules, wherein the photovoltaic modules (3, 3a, 3b) per photovoltaic module pair are arranged on at least one controllably movable cable (2) and are arranged at a distance along a height extension above a usable surface, **characterised in that** each photovoltaic module pair (3, 3a, 3b), the position of one photovoltaic module of the pair relative to the position of the other photovoltaic module of the pair can be changed by means of a control system by moving said at least one cable (2) from a maximum power generation state to a maximum sunlight irradiation state and vice versa, such that in the maximum sunlight irradiation state, the position of one photovoltaic module (3, 3a, 3b) has a minimum distance from the position of the other photovoltaic module and, in the maximum power generation state, the position of the one photovoltaic module (3, 3a, 3b) has a maximum distance from the position of the other photovoltaic module.

## Revendications

1. Système pour la production d'énergie et la pulvérisation d'une surface utile, comprenant un premier dispositif de retenue de câble (4) disposé à une première extrémité d'une direction longitudinale du système et un seconde dispositif de retenue de câble (4) disposé à une seconde extrémité de la direction longitudinale du système opposée à la première extrémité, au moins un dispositif de support (1) disposé entre les premier et seconde dispositifs de retenue de câble (4), au moins un câble (2), au moins une paire de modules photovoltaïques (3, 3a, 3b) et au moins un dispositif de déplacement,
chaque dispositif de support (1) présentant une extension en hauteur jusqu'à une zone de retenue supérieure et ledit au moins un câble (2) étant tendu sur une distance de tension (5a, 5b) entre le premier et le second dispositif de retenue de câble (4) et étant maintenu au moins en partie dans la zone de retenue,
la section de tension (5a, 5b) s'étendant dans une première partie (5a) depuis le premier dispositif de retenue de câble (4) s'étend vers le second dispositif de retenue de câble (4) en passant par des dispositifs de support (1) respectivement adjacents et s'étend dans une seconde section partielle (5b) vers le premier dispositif de retenue de câble (4) en passant par les dispositifs de support (1) respectivement adjacents, ledit au moins un câble (2) pouvant être déplacé le long du tronçon de tension (5a, 5b) au moyen du dispositif de déplacement,
**caractérisé en ce que**, pour chaque paire de modules photovoltaïques (3, 3a, 3b), les deux modules photovoltaïques (3a, 3b) sont disposés sur ledit au moins un câble (2), et **en ce que**, pour chaque paire de modules photovoltaïques (3, 3a, 3b), le module photovoltaïque (3a) de la paire est disposé de manière rigide, fixe et/ou fixé à un tronçon dudit au moins un câble (2) disposé dans le premier tronçon (5a) du tronçon de tension, et l'autre module photovoltaïque (3b) de la paire est disposé de manière rigide, fixe et/ou fixé à un tronçon dudit au moins un câble (2) disposé dans le seconde tronçon (5b) du tronçon de tension. (2) et l'autre module photovoltaïque (3b) de la paire est disposé de manière rigide, fixe et/ou fixé dans la seconde section partielle (5b) du tronçon de tension, sur un tronçon partiel du câble (2) au moins disposé dans la seconde section partielle (5b), et les modules photovoltaïques d'une paire de modules photovoltaïques (3, 3a, 3b) sont disposés de manière adjacente le long du tronçon de tension (5a, 5b).

2. Système selon la revendication précédente, la zone de retenue comportant au moins une première section de retenue et une seconde section de retenue disposée à l'opposé de la première, et le câble (2) étant maintenu dans la zone de maintien par les dispositifs de support (1) au moyen des sections de maintien, ledit au moins un câble (2) étant maintenu à l'intérieur de la première section partielle (5a) du tronçon de tension par la première section de maintien et à l'intérieur de la seconde section partielle (5b) du tronçon de tension par la seconde section de maintien.

3. Système selon l'une des revendications précédentes, la hauteur libre de l'extension en hauteur étant d'au moins 1,5 m.

4. Système selon l'une des revendications précédentes, dans lequel le dispositif de déplacement est couplé à une commande qui est conçue pour commander le dispositif de déplacement sur la base de valeurs prédéterminées et/ou de données de capteurs.

5. Système selon la revendication précédente, dans lequel, dans l'état de production d'électricité maximale, les modules photovoltaïques (3, 3a, 3b) de chaque paire ne sont pas, du moins pas complètement, superposés et/ou, avec un ensoleillement maximal, les modules photovoltaïques (3, 3a, 3b) de chaque paire sont superposés, au moins partiellement.

6. Système selon l'une des revendications précédentes, dans lequel le système comprend au moins un dispositif de retenue s'étendant entre chaque dispositif support (1).

7. Système selon l'une des revendications précédentes, le système comportant, pour chaque paire de modules photovoltaïques (3, 3a, 3b), au moins un module photovoltaïque (3a) immobile, en particulier fixé de manière stationnaire, ledit au moins un module photovoltaïque (3a) immobile pouvant être disposé, par exemple, sur le dispositif de maintien selon la revendication précédente, en particulier de manière fixe.

8. Système selon l'une des revendications précédentes, dans lequel les dispositifs de support comprennent de l'acier de construction.

9. Système selon l'une des revendications précédentes, chaque paire de modules photovoltaïques (3, 3a, 3b), un module photovoltaïque (3a) de la paire est disposé à l'intérieur de la première section partielle (5a) du tronçon de tension, est fixé de manière fixe à au moins un câble (2) et est fixé de manière mobile à la seconde section partielle (5b), et l'autre module photovoltaïque (3b) de la paire, qui est fixé de manière fixe à au moins un câble (2) à l'intérieur de la seconde section partielle (5b) du tronçon de tension, est fixé de manière non fixe à la première section partielle (5a).

10. Système selon l'une des revendications précédentes, dans lequel des modules photovoltaïques fixes et mobiles (3, 3a, 3b) sont disposés en alternance sur chaque section.

11. Système selon l'une des revendications précédentes, dans lequel chaque module photovoltaïque (3, 3a, 3b) est disposé de manière fixe uniquement sur une section partielle (5a, 5b) et, en particulier, chaque module photovoltaïque (3, 3a, 3b) est disposé de manière fixe sur une section partielle (5a, 5b) et de manière mobile sur l'autre section partielle (5b, 5a).

12. Système selon l'une des revendications précédentes, dans lequel le ou les supports fixes et/ou mobiles sont réalisés au moyen de pinces plates et/ou d'articulations (7, 7b), les pinces et/ou articulations (7, 7b) étant au moins partiellement biseautées, la surface inclinée du support fixe d'un module photovoltaïque de la paire (3, 3a, 3b), la surface inclinée du support fixe d'un module photovoltaïque de la paire est conçue et/ou disposée de manière complémentaire au support mobile de l'autre module photovoltaïque de la paire.

13. Système selon l'une des revendications précédentes, dans lequel ledit au moins un câble (2) est conçu pour conduire le courant, en particulier le courant produit par les modules photovoltaïques (3, 3a, 3b).

14. Système selon l'une des revendications précédentes, dans lequel ledit au moins un câble (2) comporte et/ou représente au moins un conducteur électrique et en particulier une couche isolante, en particulier autour du conducteur électrique, et/ou est divisé en deux sections isolées électriquement l'une de l'autre et/ou les sections sont isolées électriquement l'une de l'autre et/ou le câble (2) et/ou les sections partielles sont reliées électriquement aux modules photovoltaïques (3, 3a, 3b) pour dériver l'énergie électrique produite.

15. Procédé pour commander le positionnement de modules photovoltaïques (3, 3a, 3b) plusieurs paires de modules photovoltaïques, les modules photovoltaïques (3, 3a, 3b) de chaque paire de modules photovoltaïques sont disposés sur au moins un câble (2) mobile de manière contrôlable et sont disposés à une certaine distance le long d'une extension en hauteur au-dessus d'une surface utile, **caractérisé en ce que** chaque paire de modules photovoltaïques (3, 3a, 3b), la position d'un module photovoltaïque de la paire par rapport à la position de l'autre module photovoltaïque de la paire peut être modifiée au moyen d'une commande par le mouvement d'au moins un câble (2) d'un état de production d'électricité maximale à un état d'ensoleillement maximal et inversement, de telle sorte que, dans l'état d'ensoleillement maximal, la position d'un module photovoltaïque (3, 3a, 3b) présente une distance minimale par rapport à la position de l'autre module photovoltaïque et, dans l'état de production d'électricité maximale, la position du module photovoltaïque (3, 3a, 3b) présente une distance maximale par rapport à la position de l'autre module photovoltaïque.
